# EUROPÄISCHE PATENTSCHRIFT

(11) **EP 2 888 811 B1**
(45) Veröffentlichungstag und Bekanntmachung des Hinweises auf die Patenterteilung: **18.01.2017**
(21) Anmeldenummer: 13753163.8
(22) Anmeldetag: 21.08.2013
(51) Int. Cl.: H02P 7/24, H02K 7/14, B25B 21/00, B25F 5/00

(54) **VERFAHREN UND VORRICHTUNG ZUM REGELN EINES ELEKTROMOTORS EINER HANDWERKZEUGMASCHINE**
METHOD AND DEVICE FOR CONTROLLING AN ELECTRIC MOTOR OF A HAND-HELD POWER TOOL
PROCÉDÉ ET DISPOSITIF DE RÉGLAGE D'UN MOTEUR ÉLECTRIQUE DE MACHINE-OUTIL PORTATIVE

(30) Priorität: 23.08.2012 DE 102012214975
(43) Veröffentlichungstag der Anmeldung: 01.07.2015
(73) Patentinhaber: Hilti Aktiengesellschaft, 9494 Schaan (LI)
(72) Erfinder: FORSTNER, Markus, 86899 Landsberg (DE); JAKOB, Manfred, 86916 Kaufering (DE)
(86) Internationale Anmeldenummer: PCT/EP2013/067357
(87) Internationale Veröffentlichungsnummer: WO 2014/029795

(56) Entgegenhaltungen:
- EP-A1- 2 241 404

## Beschreibung

### GEBIET DER ERFINDUNG

Die vorliegende Erfindung betrifft ein Verfahren und eine Vorrichtung zum Regeln eines Elektromotors einer Handwerkzeugmaschine. Die Erfindung betrifft ferner eine Steuervorrichtung für eine Handwerkzeugmaschine mit einer solchen Vorrichtung sowie eine solche Handwerkzeugmaschine, insbesondere eine elektrische Handwerkzeugmaschine, wie zum Beispiel einen Elektroschrauber oder eine handgehaltene Bohrmaschine.

Der Elektromotor der Handwerkzeugmaschine wird herkömmlicherweise mittels einer Drehzahlregelung auf eine Soll-Drehzahl geregelt.

Allerdings arbeiten moderne Drehzahlregelungen mitunter so genau, dass durch Resonanzwirkungen die Kommutatoren von mechanisch kommutierten Motoren unrund werden. Dadurch kann der Kohleverschleiß des mechanisch kommutierten Motors übermäßig zunehmen. Durch die Zunahme des Kohleverschleißes reduziert sich die Nutzungsdauer des mechanisch kommutierten Motors der Handwerkzeugmaschine.

Daher ist es eine Aufgabe der Erfindung, die Regelung eines Elektromotors einer Handwerkzeugmaschine zu verbessern.

Dokument EP-A-2241404 beschreibt alle Merkmale des Oberbegriffes des Anspruches 1

### 25 OFFENBARUNG DER ERFINDUNG

Erfindungsgemäß wird ein Verfahren zum Regeln eines Elektromotors einer Handwerkzeugmaschine nach Anspruch 1 beschrieben. Durch das Variieren der Soll-Drehzahl kann die Ist-Drehzahl des Elektromotors gezielt variiert werden, insbesondere um einen bestimmten Arbeitspunkt gezielt variiert werden. Der Arbeitspunkt ist durch eine Betätigung eines durch einen Nutzer betätigbaren Schalters der Handwerkzeugmaschine bestimmt. Durch das gezielte Variieren der Ist-Drehzahl des Elektromotors werden Resonanzwirkungen an den Kommutatoren von mechanisch kommutierten Elektromotoren verhindert. Somit wird verhindert oder vermieden, dass die Kommutatoren der mechanisch kommutierten Motoren unrund werden, folglich wird auch ein übermäßiger Kohleverschleiß verhindert. Dadurch kann sich die Nutzungsdauer der Handwerkzeugmaschine erhöhen.

Bei einer Ausführungsform wird die Soll-Drehzahl in Abhängigkeit von einer Betätigung eines durch einen Nutzer betätigbaren Schalters der Handwerkzeugmaschine vorgegeben.

Somit gibt der Nutzer oder Anwender der Handwerkzeugmaschine die Soll-Drehzahl vor, die erfindungsgemäß um einen (kleinen) Wert des bestimmten Variationsbereiches variiert wird.

Bei einer weiteren Ausführungsform hat das Verfahren die Schritte: Festlegen der Zeitdauer für das Variieren der vorgegebenen Soll-Drehzahl, und Variieren der vorgegeben Soll-Drehzahl jeweils nach Ablauf der festgelegten Zeitdauer.

Die Zeitdauer, nach deren Ablauf die vorgegebene Soll-Drehzahl variiert wird, kann gemäß dieser Ausführungsform a priori festgelegt werden. Die festgelegte Zeitdauer kann in einem Speicher der Handwerkzeugmaschine abgelegt werden.

Bei einer weiteren Ausführungsform hat das Verfahren die Schritte: Festlegen des Wertes für das Variieren der Soll-Drehzahl, und Variieren der vorgegebenen Soll-Drehzahl jeweils nach Ablauf einer Zeitdauer um den festgelegten Wert zur Bereitstellung der variierten Soll-Drehzahl.

Der Wert oder Variationswert der Soll-Drehzahl kann a priori, d.h. vor der ersten Benutzung der Handwerkzeugmaschine, festgelegt werden. Dieser festgelegte Wert kann in dem Speicher der Handwerkzeugmaschine abgelegt werden.

Bei einer weiteren Ausführungsform wird die vorgegebene Soll-Drehzahl nach Ablauf der jeweiligen (2n)-ten Zeitdauer um den festgelegten Wert inkrementiert und nach Ablauf jeder (2n+1)-ten Zeitdauer um den festgelegten Wert dekrementiert (n ∈ N). Somit wird die vorgegebene Soll-Drehzahl abwechselnd etwas erhöht und wieder erniedrigt. Dies stellt eine einfache Ausführungsform der Variation der Soll-Drehzahl dar. Die mittlere Drehzahl bleibt konstant. Die Zeitdauer ist größer als das Zehnfache einer Umlaufsdauer des Rotors.

Bei einer weiteren Ausführungsform wird die vorgegebene Solldrehzahl jeweils nach Ablauf einer Zeitdauer um einen jeweiligen bestimmbaren Wert zur Bereitstellung der variierten Soll-Drehzahl variiert, wobei der jeweilige Wert mittels eines Zufallsgenerators bestimmt wird.

Durch die hier vorgeschlagene Verwendung von durch einen Zufallsgenerator bestimmbaren Werten wird die Resonanzwirkung an den Kommutatoren eines mechanisch kommutierten Motors weiter vermindert.

Weiterhin wird eine Vorrichtung zum Regeln eines Elektromotors einer Handwerkzeugmaschine nach dem Verfahren von Anspruch 1 beschrieben.

Das jeweilige Mittel, Vorgabemittel, Variationsmittel und Regelungsmittel, kann hardwaretechnisch und/oder auch software-technisch implementiert sein. Bei einer hardwaretechnischen Implementierung kann das jeweilige Mittel als Vorrichtung oder als Teil einer Vorrichtung, zum Beispiel als Computer oder als Mikroprozessor ausgebildet sein. Bei einer software-technischen Implementierung kann das jeweilige Mittel als Computerprogrammprodukt, als eine Funktion, als eine Routine, als Teil eines Programmcodes oder als ausführbares Objekt ausgebildet sein.

Außerdem wird eine Steuervorrichtung für eine Handwerkzeugmaschine vorgeschlagen, wobei die Steuervorrichtung die oben beschriebene Vorrichtung zum Regeln des Elektromotors der Handwerkzeugmaschine integriert. Die Vorrichtung ist damit Teil der auch als Schalter bezeichneten Steuervorrichtung der Handwerkzeugmaschine.

Weiterhin wird eine Handwerkzeugmaschine mit einer solchen Vorrichtung vorgeschlagen. Die Handwerkzeugmaschine ist insbesondere eine elektrische Handwerkzeugmaschine, wie zum Beispiel ein Elektroschrauber, eine handgehaltene Bohrmaschine, ein Meißelhammer, ein Kombihammer, ein Akkuschrauber, eine Kreissäge oder eine Säbelsäge.

### KURZE BESCHREIBUNG DER FIGUREN

Die nachfolgende Beschreibung erläutert die Erfindung anhand von exemplarischen Ausführungsformen und Figuren. In den Figuren zeigt:
Fig. 1 eine Handwerkzeugmaschine
Fig. 2 ein schematisches Ablaufdiagramm eines Verfahrens zum Regeln eines Elektromotors einer Handwerkzeugmaschine;
Fig. 3 ein schematisches Blockschaltbild eines Ausführungsbeispiels einer Vorrichtung zum Regeln eines Elektromotors einer Handwerkzeugmaschine; und

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

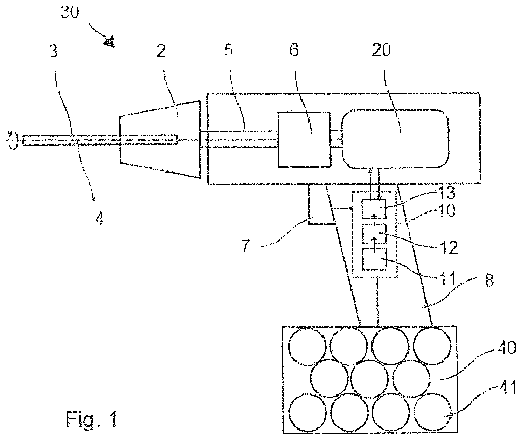

Fig. 1 zeigt eine beispielhafte Handwerkzeugmaschine 30, z.B. einen Elektroschrauber. Die Handwerkzeugmaschine hat eine Werkzeugaufnahme 2, in welche ein Werkzeug 3 einsetzbar oder befestigbar ist. Die Werkzeuge sind beispielsweise ein Schrauberbit, einen Bohrer, eine Schleifscheibe und ein Sägeblatt. Ein Elektromotor 20 treibt die Werkzeugaufnahme 2 an, hier beispielhaft um eine Arbeitsachse 4 drehend. Ein Antriebsstrang zwischen der Werkzeugaufnahme 2 und dem Elektromotor 20 kann eine Spindel 5, ein Getriebe 6 und weitere Komponenten, z.B. eine Drehmomentkupplung, ein Exzenterrad enthalten.

Ein Anwender nimmt die Handwerkzeugmaschine 30 durch Betätigen eines Schalters 7 in Betrieb. Der Schalter 7 ist vorzugsweise an einem Handgriff 8 angeordnet, mit welchem der Anwender die Handwerkzeugmaschine 30 halten und führen kann. Eine Steuerung 10 versorgt ansprechend auf das Betätigen den Elektromotor 20 mit Strom. Eine beispielhafte Stromquelle der Handwerkzeugmaschine 30 ist ein Batteriepaket 40 mit mehreren sekundären Batteriezellen 41.

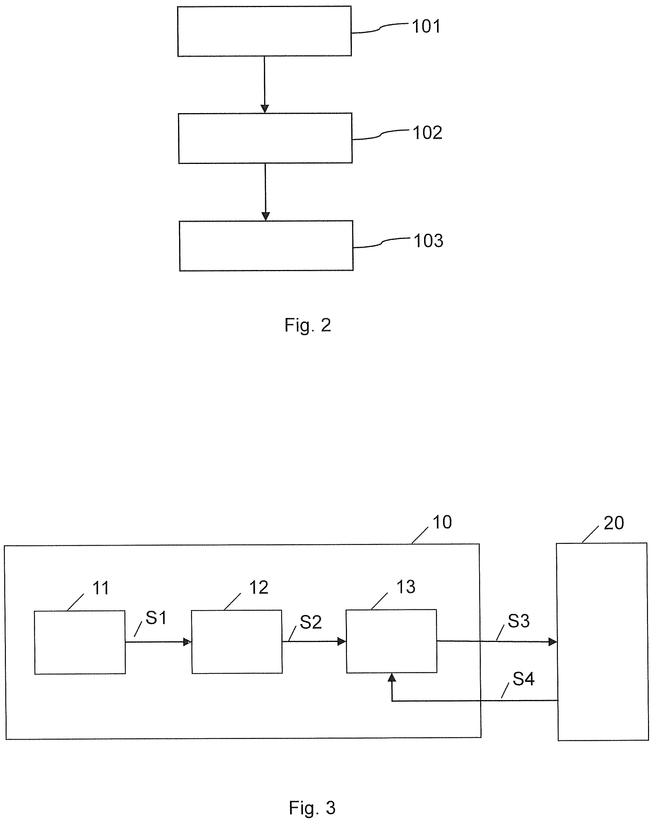

In Fig. 2 ist ein schematisches Ablaufdiagramm eines Verfahrens zum Regeln eines Elektromotors 20 einer Handwerkzeugmaschine 30 (siehe auch Fig. 3) dargestellt.

In Schritt 101 wird eine Soll-Drehzahl S1 für den Elektromotor 20 vorgegeben.

Dabei wird die Soll-Drehzahl S1 beispielsweise in Abhängigkeit von einer Betätigung eines durch einen Nutzer betätigbaren Schalters 7 der Handwerkzeugmaschine 30 vorgegeben.

In Schritt 102 wird die vorgegebene Soll-Drehzahl S1 jeweils nach Ablauf einer Zeitdauer um einen Wert eines bestimmten Variationsbereiches zur Bereitstellung einer variierten Soll-Drehzahl S2 variiert.

Beispielsweise wird die Zeitdauer für das Variieren der vorgegebenen Soll-Drehzahl S1 festgelegt und die vorgegebene Soll-Drehzahl S1 wird jeweils nach Ablauf dieser festgelegten Zeitdauer variiert. Die festgelegte Zeitdauer kann insbesondere vor einer ersten Inbetriebnahme der Handwerkzeugmaschine 30 festgelegt werden und in dem Speicher der Handwerkzeugmaschine 30 abgelegt werden.

Gemäß der beanspruchten Erfindung kann die vorgegebene Soll-Drehzahl S1 jeweils nach Ablauf einer bestimmbaren Zeitdauer variiert werden. Hierbei kann die bestimmbare Zeitdauer jeweils mittels eines Zufallsgenerators bestimmt werden. Damit besteht die Abfolge der Zeitdauer aus quasi-zufälligen Zeitdauern unterschiedlicher Länge.

Ferner kann der Wert für das Variieren der Soll-Drehzahl S1 festgelegt, d.h. a priori bestimmt werden. Dann wird die vorgegebene Soll-Drehzahl S1 jeweils nach Ablauf einer Zeitdauer um den festgelegten Wert zur Bereitstellung der variierten Soll-Drehzahl S2 variiert. Hierbei kann beispielsweise eine vorgegebene Soll-Drehzahl S1 nach Ablauf einer jeweiligen (2n)-ten Zeitdauer um den festgelegten Wert inkrementiert werden und nach Ablauf jeder (2n+1)-ten Zeitdauer um den festgelegten Wert dekrementiert werden (n ∈ N). Als Alternative zur Verwendung festgelegter Werte können auch bestimmbare Werte eingesetzt werden, welche mittels eines Zufallsgenerators bestimmt werden. Hierbei kann der Zufallsgenerator den bestimmbaren Wert jeweils nach Ablauf einer Zeitdauer bestimmen, beispielsweise nach Ablauf einer festgelegten Zeitdauer oder auch nach Ablauf einer mittels eines Zufallsgenerators bestimmbaren Zeitdauer.

Insgesamt wird die vorgegebene Soll-Drehzahl S1 vorzugsweise jeweils nach Ablauf der Zeitdauer um zumindest 50 U/min zur Bereitstellung der variierten Soll-Drehzahl S2 variiert. Der Variationsbereich für den Wert zum Variieren der Soll-Drehzahl S1 wird vorzugsweise durch eine 5%ige Abweichung der vorgegebenen Soll-Drehzahl S1 bestimmt.

In Schritt 103 wird die Ist-Drehzahl des Elektromotors auf die bereitgestellte variierte Soll-Drehzahl geregelt. Als Stellgröße S3 für das Regeln der variierten Soll-Drehzahl S2 auf die Ist-Drehzahl S4 wird vorzugsweise ein Phasenwinkel für eine Phasenanschnittsteuerung des Elektromotors 20 verwendet.

Das vorgeschlagene Verfahren ist beispielsweise auf Handwerkzeugmaschinen mit Kohlebürsten-Motoren anwendbar.

Fig. 3 zeigt ein schematisches Blockschaltbild eines Ausführungsbeispiels einer Vorrichtung 10 zum Regeln eines Elektromotors 20 einer Handwerkzeugmaschine 30.

Die Vorrichtung 10 der Fig. 2 hat ein Vorgabemittel 11, ein Variationsmittel 12 und ein Regelungsmittel 13. Das Vorgabemittel 11 ist zum Vorgeben einer Soll-Drehzahl S1 für den Elektromotor 20 eingerichtet. Das Variationsmittel 12 ist dazu eingerichtet, die vorgegebene Soll-Drehzahl S1 jeweils nach Ablauf einer Zeitdauer um einen Wert eines bestimmten Variationsbereiches zur Bereitstellung einer variierten Soll-Drehzahl S2 zu variieren bzw. zu ändern. Das Regelungsmittel 13 ist dazu eingerichtet, eine Ist-Drehzahl S4 des Elektromotors 20 auf die bereitgestellte variierte Soll-Drehzahl S2 zu regeln. Dazu steuert das Regelungsmittel 13 den Elektromotor 20 mittels einer Stellgröße S3 an. Die Stellgröße S3 ist beispielsweise ein Phasenwinkel einer Phasenanschnittsteuerung des Elektromotors 20.

## Patentansprüche

1. Verfahren zum Regeln eines Elektromotors (20) einer Handwerkzeugmaschine (30), mit:
Vorgeben (101) einer Soll-Drehzahl (S1) für den Elektromotor (20),
Variieren (102) der vorgegebenen Soll-Drehzahl (S1) jeweils nach Ablauf einer Zeitdauer um einen Wert eines bestimmten Variationsbereiches zur Bereitstellung einer variierten Soll-Drehzahl (S2), und
Regeln (103) einer Ist-Drehzahl (S4) des Elektromotors (20) auf die bereitgestellte variierte Soll-Drehzahl (S2)
**dadurch gekennzeichnet, dass** die vorgegebene Soll-Drehzahl (S1) jeweils nach Ablauf einer bestimmbaren Zeitdauer variiert wird, wobei die Zeitdauer jeweils mittels eines Zufallgenerators bestimmt wird.

2. Verfahren nach Anspruch 1, **dadurch gekennzeichnet, dass** die Soll-Drehzahl (S1) in Abhängigkeit von einer Betätigung eines durch einen Nutzer betätigbaren Schalters (7) der Handwerkzeugmaschine (30) vorgegeben wird.

3. Verfahren nach Anspruch 1 oder 2, **gekennzeichnet durch**
Festlegen der Zeitdauer für das Variieren der vorgegebenen Soll-Drehzahl (S1), und Variieren der vorgegeben Soll-Drehzahl (S1) jeweils nach Ablauf der festgelegten Zeitdauer.

4. Verfahren nach einem der Ansprüche 1 bis 3, **gekennzeichnet durch**
Festlegen des Wertes für das Variieren der Soll-Drehzahl (S1), und
Variieren der vorgegebenen Soll-Drehzahl (S1) jeweils nach Ablauf einer Zeitdauer um den festgelegten Wert zur Bereitstellung der variierten Soll-Drehzahl (S2).

5. Verfahren nach Anspruch 4, **dadurch gekennzeichnet, dass** die vorgegebene Soll-Drehzahl (S1) nach Ablauf der jeweiligen (2n)-ten Zeitdauer um den festgelegten Wert inkrementiert wird und nach Ablauf jeder (2n+1)-ten Zeitdauer um den festgelegten Wert dekrementiert wird, mit n ∈ N.

6. Verfahren nach einem der Ansprüche 1 bis 3, **dadurch gekennzeichnet, dass** die vorgegebene Solldrehzahl (S1) jeweils nach Ablauf einer Zeitdauer um einen jeweiligen bestimmbaren Wert zur Bereitstellung der variierten Soll-Drehzahl (S2) variiert wird, wobei der jeweilige Wert mittels eines Zufallsgenerators bestimmt wird.

7. Vorrichtung (10) zum Regeln eines Elektromotors (20) einer Handwerkzeugmaschine (30), nach dem Verfahren von Anspruch 1.

8. Steuervorrichtung für eine Handwerkzeugmaschine (30), wobei die Steuervorrichtung eine Vorrichtung (10) nach Anspruch 7 integriert.

9. Handwerkzeugmaschine (30) mit einer Vorrichtung (10) zum Ansteuern eines Elektromotors (20) der Handwerkzeugmaschine (30) nach Anspruch 7.

## Claims

1. Method of controlling the electric motor (20) of a hand-held power tool (30), comprising the steps:
presetting (100) a setpoint speed (S1) for the electric motor (20),
varying (102) the preset setpoint speed (S1) by a value within a defined range of variation after a given period of time in order to provide a varied setpoint speed (S2), and
adjusting (103) the actual speed (S4) of the electric motor (20) to the varied setpoint speed (S2) provided,
**characterised in that** the preset setpoint speed (S1) is varied after a given definable period of time, wherein each period of time is defined by means of a random generator.

2. Method according to claim 1, **characterised in that** the setpoint speed (S1) is preset as a function of the actuation of a switch (7) of the hand-held power tool (30) that can be actuated by a user.

3. Method according to claim 1 or claim 2, **characterised by** specifying the period of time for varying the preset setpoint speed (S1) and varying the preset setpoint speed (S1) after each specified period of time.

4. Method according to one of claims 1 to 3, **characterised by** specifying the value for varying the setpoint speed (S1) and varying the preset setpoint speed (S1) by the specified value after a given period of time in order to provide the varied setpoint speed (S2).

5. Method according to claim 4, **characterised in that** the preset setpoint speed (S1) is incremented by the specified value after the respective (2n)^{th} period of time and is decremented by the specified value after every (2n+1)^{th} period of time, where n ∈ N.

6. Method according to one of claims 1 to 3, **characterised in that** the preset setpoint speed (S1) is varied by a respective definable value after a given period of time in order to provide the varied setpoint speed (S2), wherein the respective value is defined by means of a random generator.

7. Device (10) for controlling the electric motor (20) of a hand-held power tool (30) according to the method of claim 1.

8. Control device for a hand-held power tool (30), wherein a device (10) according to claim 7 is integrated into the control device.

9. Hand-held power tool (30) comprising a device (10) for controlling the electric motor (20) of the hand-held power tool (30) according to claim 7.

## Revendications

1. Procédé destiné à réguler un moteur électrique (20) d'une machine-outil manuelle (30), comportant les étapes consistant à :
prédéfinir (101) une vitesse de rotation de consigne (S1) pour le moteur électrique (20),
faire varier (102) la vitesse de rotation de consigne prédéfinie (S1) après chaque expiration d'une durée autour d'une valeur située dans une plage de variation déterminée afin de fournir une vitesse de rotation de consigne modifiée (S2), et
réguler (103) une vitesse de rotation réelle (S4) du moteur électrique (20) jusqu'à la vitesse de rotation de consigne modifiée fournie (S2),
**caractérisé en ce que** la vitesse de rotation de consigne prédéfinie (S1) varie après chaque expiration d'une durée pouvant être déterminée, dans lequel la durée est respectivement déterminée au moyen d'un générateur aléatoire.

2. Procédé selon la revendication 1, **caractérisé en ce que** la vitesse de rotation de consigne (S1) est prédéfinie en fonction d'une activation d'un commutateur (7) de la machine-outil manuelle (30) actionnable par un utilisateur.

3. Procédé selon la revendication 1 ou 2, **caractérisé par** les étapes consistant à :
spécifier la durée pour la variation de la vitesse de rotation de consigne prédéfinie (S1), et
faire varier la vitesse de rotation de consigne prédéfinie (S1) après chaque expiration de la durée spécifiée.

4. Procédé selon l'une des revendications 1 à 3, **caractérisé par** les étapes consistant à :
spécifier la valeur pour la variation de la vitesse de rotation de consigne (S1), et
faire varier la vitesse de rotation de consigne prédéfinie (S1) après chaque expiration d'une durée autour de la valeur spécifiée pour fournir la vitesse de rotation de consigne modifiée (S2).

5. Procédé selon la revendication 4, **caractérisé en ce que** la vitesse de rotation de consigne prédéfinie (S1) est incrémentée de la valeur spécifiée après l'expiration de chaque (2n)^{ème} durée, et est décrémentée de la valeur spécifiée après l'expiration de chaque (2n+1)^{ème} durée, n ∈ N.

6. Procédé selon l'une des revendications 1 à 3, **caractérisé en ce que** la vitesse de rotation de consigne prédéfinie (S1) varie après chaque expiration d'une durée autour d'une valeur respective pouvant être déterminée pour fournir la vitesse de rotation de consigne modifiée (S2), dans lequel la valeur respective est déterminée au moyen d'un générateur aléatoire.

7. Dispositif (10) pour réguler un moteur électrique (20) d'une machine-outil manuelle (30) selon le procédé de la revendication 1.

8. Dispositif de commande pour une machine-outil manuelle (30), dans lequel le dispositif de commande intègre un dispositif (10) selon la revendication 7.

9. Machine-outil manuelle (30) ayant un dispositif (10) pour commander un moteur électrique (20) de la machine-outil manuelle (30) selon la revendication 7.
